# EUROPÄISCHE PATENTSCHRIFT

(11) **EP 3 947 256 B1**
(45) Veröffentlichungstag und Bekanntmachung des Hinweises auf die Patenterteilung: **31.12.2025**
(21) Anmeldenummer: 20712282.1
(22) Anmeldetag: 16.03.2020
(51) Int. Cl.: B67C 3/20, B65B 3/28, B65B 1/32, B65B 3/00, B65B 31/02, B65B 57/14

(54) **ABFÜLLVORRICHTUNG ZUM FÜLLEN VON IN EINEM EINWEG-ISOLATOR VORGESEHENEN BEHÄLTER**
FILLING DEVICE FOR FILLING OF CONTAINERS IN A SINGLE-USE ISOLATOR
DISPOSITIF DE REMPLISSAGE POUR REMPLIR DES RÉCIPIENTS DANS UN ISOLATEUR À USAGE UNIQUE

(30) Priorität: 29.03.2019 DE 102019204439
(43) Veröffentlichungstag der Anmeldung: 09.02.2022
(73) Patentinhaber: Bausch + Ströbel SE + Co. KG, 74532 Ilshofen (DE)
(72) Erfinder: ZIMMERMANN, Markus, 74585 Rot am See (DE)
(74) Vertreter: Weickmann & Weickmann PartmbB
(86) Internationale Anmeldenummer: PCT/EP2020/057052
(87) Internationale Veröffentlichungsnummer: WO 2020/200719

(56) Entgegenhaltungen:
- WO-A1-2010/100234
- US-A1- 2016 368 629
- MATTHIAS HÄNSEL: "Vorteile von kundenspezifisch entwickelten Folienlösungen gegenüber Edelstahlsystemen im Containmentbereich | chemanager-online.com - Chemie und Life Science", 8 October 2014 (2014-10-08), Wiley-Vch Verlag Gmbh & Co. Kgaa, XP055706557, Retrieved from the Internet <URL:https://www.chemanager-online.com/themen/reinraumtechnik/vorteile-von-kundenspezifisch-entwickelten-folienloesungen-gegenueber-edelsta> [retrieved on 20200618]

## Beschreibung

Anwendungsgebiet der vorliegenden Erfindung ist insbesondere das dosierte Abfüllen von aseptischen oder toxischen Substanzen, beispielsweise Medikamenten, in Abfüllbehälter in einer die abzufüllenden Substanzen vor Kontamination schützenden - und ein Entweichen von abzufüllender Substanz in die Umgebung vermeidenden Weise.

Bei den bisher bekannten Abfüllvorrichtungen der hier betrachteten Art besteht das Problem, dass eine möglichst genaue Erfassung der Abfüllmengen schwierig war bzw. umständliche Maßnahmen erforderten. Eine Wägung der in einem betreffenden Einweg-Isolator befindlichen Füllgutdosisaufnahmebehälter mittels einer außerhalb des Einweg-Isolators vorgesehenen Wiegeeinrichtung während eines Abfüllvorganges ist schwierig und liefert keine sehr sicheren Ergebnisse, da stets ein Teil der Folienwandung des Einweg-Isolators zwischen der Wiegeeinrichtung und dem betreffenden Füllgutdosisaufnahmebehälter bei der Wägung stört. Eine In-Prozess-Kontrolle der Abfüllvorgänge gestaltet sich bei einer derartigen Vorgehensweise schwierig und ungenau.

Es sind auch bereits Abfüllvorrichtungen der hier betrachteten Art diskutiert worden, bei welchen eine Wiegeeinrichtung so vorgesehen ist, dass eine Waagschale oder Waagplattform der Wiegeeinrichtung innerhalb des Einweg-Isolators positioniert ist, wohingegen die übrige Wiegeeinrichtung mit Bedienelementen, Anzeigeeinrichtung, Elektronik etc. außerhalb des Einweg-Isolators angeordnet ist, so dass über eine steril abgedichtete Steckverbindung im Bereich einer Wandung des Einweg-Isolators ein lösbares, funktionsgerechtes Zusammenstecken von Waagschale bzw. Waagplattform und Wiegeeinrichtung im Übrigen erfolgen kann. Eine solche Anordnung würde somit einen Wägevorgang erlauben, bei dem die Folienwandung des Einweg-Isolators nicht nennenswert stört Die Waagschale wäre nach Beendigung eines betreffenden Abfüllvorganges entweder sehr sorgfältig zu reinigen - oder zusammen mit dem Einweg-Isolator zu entsorgen. Die Wiegeeinrichtung im Übrigen kann dann für weitere Abfüllvorgänge verwendet werden. Auch ein solcher Ansatz hat sich als nicht vorteilhaft praktikabel erwiesen.

Ferner ist eine Abfüllvorrichtung gemäß dem Oberbegriff des Anspruchs 1 mit integrierter Wiegeeinrichtung aus der US 2016/0368629 A1 bekannt. Der Einsatz von Einwegisolatoren in ähnlichen Anwendungen ist zudem in dem Artikel "Vorteile von kundenspezifisch entwickelten Folienlösungen gegenüber Edelstahlsystemen im Containmentbereich", M. Hänsel, chamanager-online.com, Hecht Technologie GmbH, diskutiert. Einen Einwegisolator in einer Vorrichtung zum manuellen Füllen von Behältern offenbart die WO 2010/100234 A1.

Der vorliegenden Erfindung liegt die Aufgabe zugrunde, eine Abfüllvorrichtung zum dosierten Abfüllen von flüssigem oder feinpulverförmigem Füllgut aus einem Füllgutvorratsbehälter in kontaminationsgeschützt in einem Einweg-Isolator vorgesehene Füllgutdosisaufnahmebehälter bereitzustellen, welche mit einfachen Mitteln eine gut kontrollierbare und präzise Dosierung der jeweiligen Abfüllmengen beim Abfüllvorgang ermöglicht, ohne Komponenten der Wiegeeinrichtung mit Abfüllgut zu kontaminieren.

Hierzu weist die erfindungsgemäße Abfüllvorrichtung die Merkmale des Anspruchs 1 und unter anderem folgende Merkmale auf:
- einen Einweg-Isolator mit den darin vorgesehenen Füllgutdosisaufnahmebehältern,
- eine Wiegeeinrichtung mit Mitteln zur Halterung und Wägung des Füllgutvorratsbehälters mit Inhalt außerhalb des Einweg-Isolators, wobei der Füllgutvorratsbehälter in oder an der Wiegeeinrichtung in Wiegebereitschaft aufgenommen ist,

- eine steuerbare Füllgutentnahmeeinrichtung zur dosisweisen Entnahme von Füllgut aus dem Füllgutvorratsbehälter außerhalb des Einweg-Isolators,
- eine Füllgutabgabeeinrichtung innerhalb des Isolators zur dosisweisen Abgabe von Füllgut an betreffende Füllgutdosisaufnahmebehälter in dem Einweg-Isolator,
- eine den Füllgutvorratsbehälter und die Füllgutabgabeeinrichtung miteinander verbindende Leitungsanordnung zur Leitung von mittels der Füllgutentnahmeeinrichtung dem Füllgutvorratsbehälter entnommenem Füllgut zur Füllgutabgabeeinrichtung und
- eine Steuereinrichtung zur Steuerung der Füllgutentnahmeeinrichtung in Abhängigkeit von Informationen der Wiegeeinrichtung, wobei die Steuereinrichtung dazu eingerichtet ist, die dem Füllgutvorratsbehälter zu entnehmenden jeweiligen Füllgutdosen in Abhängigkeit von Informationen über die Gewichtsabnahme der Einheit aus Füllgutvorratsbehälter und dessen Inhalt während der Füllgutentnahme zu bemessen.

Grundidee der vorliegenden Erfindung ist es somit, mit einer vollständig außerhalb des Einweg-Isolators vorgesehenen Wiegeeinrichtung die jeweiligen Dosismengen in der Weise zu bestimmen, dass jeweils die bei einem Abfüllvorgang um das Gewicht der betreffenden Abfüllmenge leichter werdende Einheit aus Füllgutvorratsbehälter und dessen Inhalt zu überwachen und die jeweilige Füllgutentnahme aus dem Füllgutvorratsbehälter zu stoppen, wenn die Gewichtsverminderung des Füllgutvorratsbehälters inklusive Inhalt betragsmäßig dem Soll-Gewichtswert der jeweiligen Abfülldosis entspricht. Mit einer solchen Vorgehensweise ist es mit einfachen Mitteln möglich, die Dosismengen präzise einzustellen und zu dokumentieren, ohne Komponenten der Wiegeeinrichtung mit Füllgut zu kontaminieren. Es ist daher nicht nach jedem Abfüllvorgang erforderlich, die Wiegeeinrichtung oder Komponenten davon steril zu reinigen.

Als Füllgutentnahmeeinrichtung dient vorzugsweise eine steuerbare Peristaltikpumpe, welche einen als Quetschschlauch vorgesehenen Leitungsbereich der Leitungsanordnung außen quetschend beaufschlagt und dabei Füllgut in dem Quetschschlauch in Soll-Flussrichtung verschiebt. Dabei kommen die Komponenten der Peristaltikpumpe nicht mit Füllgut unmittelbar in Kontakt. Die Peristaltikpumpe ist mittels der Steuereinrichtung steuerbar, so dass sie start- und stoppbar ist, um einen jeweiligen Abfüllvorgang zu beginnen und zu beenden.

Der Einweg-Isolator kann in an sich bekannter Weise eine den Isolator-Innenraum kontaminationsgeschützt gegenüber der Außenumgebung isolierende, vorzugsweise durchsichtige Folienwand aus Kunststofffolie aufweisen. Derartige Einweg-Isolatoren sind relativ preisgünstig und nach Gebrauch sicher und in geordneter Weise zu entsorgen.

Vorzugsweise weist der Einweg-Isolator in an sich bekannter Weise Handschuheingriffsmittel zur Handhabung von Gegenständen innerhalb des Einweg-Isolators, insbesondere zur Handhabung der Füllgutdosisaufnahmebehälter durch eine Bedienungsperson von außen auf. Die Bedienungsperson kann mittels der Handschuheingriffsmittel beispielsweise Füllgutdosisaufnahmebehälter in eine Soll-Füllstellung relativ zur Füllgutabgabeeinrichtung in dem Einweg-Isolator positionieren oder/und die Füllgutaufnahmebehälter nach Abfüllung mit Stopfen, Drehverschlüssen oder dgl. in dem Einweg-Isolator verschließen.

Gemäß einer vorteilhaften Weiterbildung der Erfindung weist der Einweg-Isolator Mittel zur sterilen Durchführung der Leitungsanordnung durch die Isolatorwand auf, sodass Füllgut mittels der Leitungsanordnung von dem außerhalb des Einwegisolators vorgesehenen Füllgutvorratsbehälter zu der in dem Einwegisolator vorgesehenen Abgabeeinrichtung ohne Gefahr der Kontamination des Außenbereichs des Einweg-Isolators gelangen kann.

Die Mittel zur sterilen Durchführung der Leitungsanordnung durch die Isolatorwand können Steckverbindungsmittel sein, welche einen innerhalb des Einweg-Isolators vorgesehenen Leitungsabschnitt mit einem außerhalb des Einwegisolators zu diesem hinführenden Leitungsabschnitt im bestimmungsgemäßen Steckverbindungszustand nach außen hin steril abdichtend verbinden. Beim Lösen der Steckverbindung dichten die am Einweg-Isolator vorgesehenen Steckverbindungsmittel den Übergang steril ab.

Gemäß der vorliegenden Erfindung weist der Einweg-Isolator in seiner Wand Anschlussmittel zum Anschließen äußerer Leitungen, insbesondere Schutzgasleitungen, für ein dem Innenraum des Einweg-Isolators kontaminationsgeschützt zuzuführendes Medium, wie etwa CO₂ oder Stickstoff, oder Reinluft, wie etwa mittels Filtern, z.B. HEPA-Filtern gefilterte, laminar strömende Luft, auf. Auch in diesem Fall ist es so, dass die dem Einweg-Isolator zugeordneten Anschlussmittel steril dicht abschließen, falls keine äußere Leitung angeschlossen ist.

Bei der Füllgutabgabeeinrichtung handelt es sich vorzugsweise um eine Füllnadel oder ggf. mehrere Füllnadeln, über welche das Füllgut in die Füllgutdosisaufnahmebehälter eingebracht wird.

Bei dem Flüssigkeitsvorratsbehälter kann es sich beispielsweise um einen Kunststofffolienbeutel mit einem unteren Anschluss für die Leitungsanordnung handeln.

Bei den Füllgutdosisaufnahmebehältern kann es sich beispielsweise um Reagenzfläschchen wie z.B. Medikamentenfläschchen, Reagenzröhrchen und dgl. handeln. Vorzugsweise sind in dem Einweg-Isolator Verschlusselemente zum Verschließen der Füllgutdosisaufnahmebehälter vorgesehen, so dass die befüllten Füllgutdosisaufnahmebehälter noch in dem Einweg-Isolator dicht verschlossen werden können, bevor sie entnommen werden.

Die Steuereinrichtung ist gemäß einer besonders bevorzugten Ausführungsform der Erfindung dazu eingerichtet, einen Wert der jeweiligen Dosismenge pro abgefülltem Füllgutdosisaufnahmebehälter, insbesondere das erfasste Dosisgewicht, in Zuordnung zu den betreffenden abgefüllten Füllgutdosisaufnahmebehältern zu speichern, um eine In-Prozess-Kontrolle zu realisieren und somit die Möglichkeit der laufenden Überwachung der Qualität der Abfüllvorgänge zu schaffen.

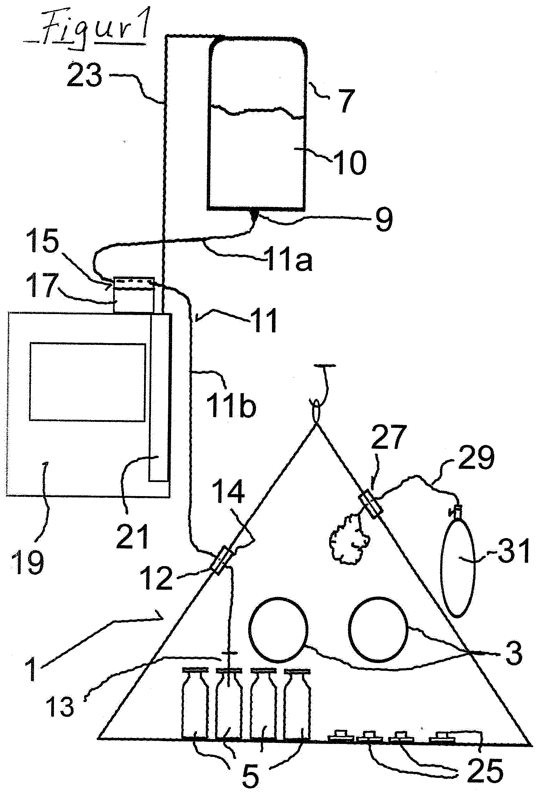

Ein Ausführungsbeispiel der Erfindung wird nachstehend unter Bezugnahme auf die schematische Darstellung einer Abfüllvorrichtung nach der Erfindung gemäß Figur 1 näher erläutert.

Mit 1 ist in Figur 1 ein Einweg-Isolator bezeichnet, bei dem es sich um eine Art geschlossenes Zelt mit Wänden aus einer durchsichtigen Kunststofffolie handelt. Der Einwegisolator hat zwei Handschuheingriffslöcher 3 an denen in den Raumbereich des Einweg-Isolators 1 hineinreichende Handschuhe (nicht gezeigt) aus einem flexiblen Kunststoffmaterial abdichtend angebracht sind (Handschuhboxprinzip). Eine Bedienungsperson kann in die Handschuheingriffslöcher 3 eingreifen, um dann unter Verwendung der Handschuhe Gegenstände in dem Einweg-Isolator 1 zu bewegen und zu handhaben. Es können ein Partikelzähler oder/und Keimsammler im Einweg-Isolator vorgesehen sein, um die Reinraumqualität darin zu überwachen bzw. sicherzustellen.

In dem Einwegisolator 1 befinden sich Fläschchen, z.B. Phiolen, als Füllgutdosisaufnahmebehälter 5, in denen ein beispielsweise toxisches Flüssigmaterial als Füllgut dosiert eingefüllt werden soll. Die Einfüllvorgänge sollen so erfolgen, dass der Außenraum des Einweg-Isolators 1 nicht mit Füllgutmaterial in irgendeiner Weise kontaminiert wird.

Das Füllgut befindet sich zunächst in einem Füllgutvorratsbehälter 7 außerhalb des Einweg-Isolators 1. Bei dem Füllgutvorratsbehälter 7 kann es sich beispielsweise um einen Folienbeutel handeln, welcher an seiner Unterseite einen Füllgutauslass 9 mit einem nach außen hin abdichtend daran angeschlossenen Leitungsabschnitt 11a einer Leitungsanordnung 11 aufweist, welche dazu dient, Füllgut aus dem Vorratsbehälter 7 zu dem Einwegisolator 1 und weiter darin zu einer Füllnadel 13 zu leiten, welche die Funktion einer Füllgutabgabeeinrichtung innerhalb des Einwegisolators 1 hat. Die Leitungsanordnung 11 besteht im Wesentlichen aus einem flexiblen Kunststoffschlauch, welcher bei 15 durch eine Peristaltikpumpe 17 geführt ist und dort den Quetschschlauschabschnitt der Peristaltikpumpe 17 bildet, an welchem das darin befindliche Füllgutmaterial durch einen Schlauchquetschvorgang in Soll-Flussrichtung zu dem Einweg-Isolator 1 hin vorgetrieben wird. Daran schließt sich ein Leitungsabschnitt 11b an, der zum Einweg-Isolator 1 führt. Die Leitungsanordnung 11 durchtritt bei 12 die Wand des Einweg-Isolators 1 in abgedichteter Weise, wozu entsprechende Mittel 14 zur sterilen Durchführung der Leitungsanordnung 11 durch die Isolator-Wand 14 vorgesehen sind. Dies können z.B. auch Steckverbindungsmittel sein.

Die Peristaltikpumpe 17 ist mittels einer Steuereinrichtung 19 steuerbar, d.h. gezielt zur Vorbewegung des Füllgutmaterials startbar und zum Stoppen der Vorbewegung des Füllgutmaterials stoppbar, sodass auf diese Weise eine Dosierung des zwischen Pumpenstart und Pumpenstopp von der Peristaltikpumpe 17 weitergeförderten Materials möglich ist.

Die Steuereinrichtung 19 weist auch eine Wiegeeinrichtung 21 auf oder ist mit einer solchen zum Empfang von Wiegeergebnissen verbunden. An einem Halterungsstab 23 der Wiegeeinrichtung 21 ist der Füllgutvorratsbehälter 7 angehängt, sodass dessen Gewicht mit Inhalt mit der Wiegeeinrichtung 21 erfassbar ist. Ein jeweiliger Abfüllvorgang kann dann in der Weise erfolgen, dass zu Beginn des Abfüllvorganges das Gewicht des Füllgutvorratsbehälters 7 mit Inhalt mittels der Wiegeeinrichtung 21 erfasst und von der Steuereinrichtung 19 registriert wird und dass auch während des weiteren Abfüllvorgangs stets das Gewicht des Füllgutvorratsbehälters 7 samt Inhalt überwacht wird. Erreicht die Gewichtsabnahme des Füllgutbehälters 7 aufgrund der Abgabe vom Füllgutmaterial daraus den Sollwert des Gewichts der gewünschten Abfülldosis, so wird in entsprechender zeitlicher Abstimmung die Peristaltikpumpe 17 gestoppt. Eine Bedienungsperson kann dann durch Eingriff in die Handschuhe bei 3 das befüllte Fläschchen 5 mit einem in dem Einwegisolator 1 bereitgehaltenen Verschlussstopfen 25 verschließen und gegebenenfalls ein nächstes zu befüllendes Fläschchen 5 in Position zu der Füllnadel 13 bringen, so dass bei einem nächsten Füllvorgang dieses Fläschchen mit einer Füllgutdosis befüllt wird.

Dies kann in entsprechender Weise fortgesetzt werden, bis alle Fläschchen 5 dosiert, befüllt und verschlossen worden sind.

Die Steuereinrichtung 19 ist dazu eingerichtet, in Zuordnung zu jedem befülltem Füllgutdosisaufnahmebehälter 5 die darin abgefüllte Dosismenge, insbesondere das Dosisgewicht, zu speichern, um so eine In-Prozess-Kontrolle zu realisieren. Auf diese Weise kann auch ohne Weiteres erkannt werden, ob unter den abgefüllten Füllgutdosisaufnahmebehältern 5 welche dabei sind, bei denen die Abfüllmenge außerhalb eines gewissen Toleranzbereichs liegt. Auch kann die Abfüllmenge des Füllgutes je nach Dosierung nachgeregelt werden. Je nach Ergebnis der Überwachung der abgefüllten Dosismengen innerhalb der Toleranzgrenzen können die Umdrehungen der Peristaltikpumpe entsprechend optimiert werden.

Bei 27 weist der Einweg-Isolator 1 in seiner Wand Anschlussmittel zum Anschließen äußerer Leitungen, hier einer Schutzgasleitung 29 auf, an dem eine betreffende Schutzgasquelle 31 angeschlossen ist. Mittels dieser Anordnung kann Schutzgas, etwa Reinluft, wie etwa mittels Filtern, z.B. HEPA-Filtern gefilterte laminar strömende Luft, CO2 oder Stickstoff, in den Innenraum des Einweg-Isolators 1 eingebracht werden, um dort auch einen gewissen Überdruck zu erzeugen, welcher verhindert, dass nach jeweiligem Stopp der Peristaltikpumpe 17 eine Nachlaufmenge aus der Füllnadel 13 austritt.

Innerhalb des Einwegisolators 1 können auch weitere Elemente bereitgestellt sein, etwa Kappen oder/und entsprechendes Werkzeug, beispielsweise eine Einweg-Zange und dgl..

## Patentansprüche

1. Abfüllvorrichtung zum dosierten Abfüllen von flüssigem oder feinpulverförmigem Füllgut (10) aus einem Füllgutvorratsbehälter (7) in kontaminationsgeschützt in einem Einwegisolator (1) vorgesehene Füllgutdosisaufnahmebehälter (5),
umfassend
- den Einwegisolator (1) mit den darin vorgesehenen Füllgutdosisaufnahmebehältern (5),
- eine Wiegeeinrichtung (21) mit Mitteln (23) zur Halterung und Wägung des Füllgutvorratsbehälters (7) mit Inhalt außerhalb des Einwegisolators (1), wobei der Füllgutvorratsbehälter (7) in oder an der Wiegeeinrichtung (21) in Wiegebereitschaft aufgenommen ist,
- eine steuerbare Füllgutentnahmeeinrichtung (17) zur dosisweisen Entnahme von Füllgut (10) aus dem Füllgutvorratsbehälter (7) außerhalb des Einwegisolators (1),
- eine Füllgutabgabeeinrichtung (13) innerhalb des Einwegisolators (1) zur dosisweisen Abgabe von Füllgut (10) an betreffende Füllgutdosisaufnahmebehälter (5) in dem Einwegisolator (1),
- eine den Füllgutvorratsbehälter (7) und die Füllgutabgabeeinrichtung (13) miteinander verbindende Leitungsanordnung (11) zur Leitung von mittels der Füllgutentnahmeeinrichtung (17) dem Füllgutvorratsbehälter (7) entnommenem Füllgut (10) zur Füllgutabgabeeinrichtung (13),
- eine Steuereinrichtung (19) zur Steuerung der Füllgutentnahmeeinrichtung (17) in Abhängigkeit von Informationen der Wiegeeinrichtung (21) , wobei die Steuereinrichtung (19) dazu eingerichtet ist, die dem Füllgutvorratsbehälter (7) zu entnehmenden jeweiligen Füllgutdosen in Abhängigkeit von Informationen über die Gewichtsabnahme der Einheit aus Füllgutvorratsbehälter (7) und dessen Inhalt während der Füllgutentnahme zu bemessen,
wobei der Einwegisolator (1) in seiner Wand Anschlussmittel (27) zum Anschließen äußerer Leitungen (29) für ein dem Innenraum des Einwegisolators (1) kontaminationsgeschützt zuzuführendes Medium aufweist,
**dadurch gekennzeichnet, dass** die Abfüllvorrichtung ferner eine Schutzgasquelle (31) umfasst, welche mittels einer Schutzgasleitung (29) an den Anschlussmitteln (27) angeschlossen ist.

2. Abfüllvorrichtung nach Anspruch 1, wobei die Füllgutentnahmeeinrichtung (17) als steuerbare Peristaltikpumpe ausgebildet ist.

3. Abfüllvorrichtung nach Anspruch 1 und/oder 2, wobei der Einwegisolator (1) eine den Isolatorinnenraum kontaminationsgeschützt gegenüber der Außenumgebung isolierende, vorzugsweise durchsichtige Folienwand aus Kunststofffolie aufweist.

4. Abfüllvorrichtung nach wenigstens einem der vorher gehenden Ansprüche, wobei der Einwegisolator (1) Handschuheingriffsmittel (3) zur Handhabung von Gegenständen (5, 13, 25) innerhalb des Einwegisolators (1) , insbesondere der Füllgutdosisaufnahmebehälter (5), durch eine Person von außen.

5. Abfüllvorrichtung nach wenigsten einem der vorher gehenden Ansprüche, wobei der Einwegisolator (1) Mittel (12,14) zur sterilen Durchführung der Leitungsanordnung (11) durch die Isolatorwand aufweist.

6. Abfüllvorrichtung nach wenigstens einem der vorher gehenden Ansprüche, wobei die Füllgutabgabeeinrichtung (13) eine Füllnadel aufweist.

7. Abfüllvorrichtung nach wenigstens einem der vorher gehenden Ansprüche, wobei der Flüssigkeitsvorratsbehälter (7) als Kunststofffolienbeutel mit einem unteren Anschluss (9) für die Leitungsanordnung (11) ausgebildet ist.

8. Abfüllvorrichtung nach wenigstens einem der vorher gehenden Ansprüche, wobei dass es sich bei den Füllgutdosisaufnahmebehältern (5) um Reagenzfläschchen oder/ und Medikamentenfläschchen handelt.

9. Abfüllvorrichtung nach wenigstens einem der vorher gehenden Ansprüche, wobei in dem Einwegisolator (1) Verschlusselemente (25) zum Verschließen der Füllgutdosisaufnahmebehälter (5) vorgesehen sind.

10. Abfüllvorrichtung nach wenigstens einem der vorher gehenden Ansprüche, wobei die Steuereinrichtung (19) dazu eingerichtet ist, einen Wert der jeweiligen Dosismenge pro abgefülltem Füllgutdosisaufnahmebehälter (5), insbesondere das erfasste Dosisgewicht, in Zuordnung zu den betreffenden abgefüllten Füllgutdosisaufnahmebehältern (5) zu speichern, um eine In-Prozess-Kontrolle zu realisieren.

## Claims

1. Filling device for the metered filling of liquid or fine-powdered filling material (10) from a filling material storage container (7) into material dose receiving containers (5) which are provided in a single-use isolator (1) in a manner protected against contamination,
comprising
- the single-use isolator (1) with the material dose receiving containers (5) provided therein,
- a weighing device (21) having means (23) for holding and weighing the filling material storage container (7), with its contents, outside of the single-use isolator (1), wherein the filling material storage container (7) is accommodated in or on the weighing device (21) in readiness for weighing,
- a controllable filling material removal device (17) for the dose-by-dose removal of filling material (10) from the filling material storage container (7) outside the single-use isolator (1)
- a filling material dispensing device (13) inside the single-use isolator (1)for the dose-by-dose dispensing of filling material (10) to given material dose receiving containers (5) in the single-use isolator (1),
- a conduit arrangement (11) connecting the filling material storage container (7) and the filling material dispensing device (13) to each other to convey filling material (10) removed from the filling material storage container (7) by means of the filling material removal device (17) to the filling material dispensing device (13),
- a control device (19) for controlling the filling material removal device (17) according to information from the weighing device (21), wherein the control device (19) is configured to measure the respective filling material doses to be removed from the filling material storage container (7) according to information about the decrease in weight of the unit consisting of the filling material storage container (7) and its contents during the filling material removal,
wherein the single-use isolator (1) has connection means (27) in its wall for connecting external lines (29) for a medium to be supplied to the interior of the single-use isolator (1) in a manner protected against contamination,
**characterized in that** the filling device further comprises a protective gas source (31), which is connected to the connection means (27) by means of a protective gas line (29)

2. Filling device according to claim 1, wherein the filling material removal device (17) is designed as a controllable peristaltic pump.

3. Filling device according to claim 1 and/or 2, wherein the single-use isolator (1) has a preferably transparent film wall made of plastic film which isolates the isolator interior from the outside environment in a manner protected against contamination.

4. Filling device according to at least one of the preceding claims, wherein the single-use isolator (1) glove interaction means (3) for a person to handle objects (5, 13, 25) inside the single-use isolator (1), in particular the material dose receiving containers (5), from the outside.

5. Filling device according to at least one of the preceding claims, wherein the single-use isolator (1) has means (12, 14) for routing the conduit arrangement (11) in a sterile manner through the isolator wall.

6. Filling device according to at least one of the preceding claims, wherein the filling material dispensing device (13) has a filling needle.

7. Filling device according to at least one of the preceding claims, wherein the liquid storage container (7) is designed as a plastic film pouch with a lower connection (9) for the conduit arrangement (11).

8. Filling device according to at least one of the preceding claims, wherein the material dose receiving containers (5) are reagent vials and/or medicine vials.

9. Filling device according to at least one of the preceding claims, wherein closure elements (25) are provided in the single-use isolator (1) for closing the material dose receiving containers (5).

10. Filling device according to at least one of the preceding claims, wherein the control device (19) is configured to store a value of each dose quantity per filling material dose receiving container (5), in particular the detected dose weight, in association with the given filling material dose receiving container (5), in order to implement an in-process control.

## Revendications

1. Dispositif de remplissage pour le remplissage dosé de produit de remplissage (10) liquides ou en poudre fine à partir d'un réservoir de produit de remplissage (7) dans des récipients de réception de dose de produit de remplissage (5) prévus dans un isolateur à usage unique (1) protégé contre la contamination, comprenant
- l'isolateur à usage unique (1) avec les récipients de réception de dose de produit de remplissage (5) qui y sont prévus,
- un dispositif de pesage (21) avec des moyens (23) pour maintenir et peser le réservoir de produit de remplissage (7) avec son contenu à l'extérieur de l'isolateur à usage unique (1), le réservoir de produit de remplissage (7) étant logé dans ou sur le dispositif de pesage (21) en position de pesage,
- un dispositif de prélèvement de produit de remplissage (17) commandable pour le prélèvement dosé de produit de remplissage (10) à partir du réservoir de produit de remplissage (7) à l'extérieur de l'isolateur à usage unique (1),
- un dispositif de distribution de produit (13) à l'intérieur de l'isolateur à usage unique (1) pour distribuer le produit (10) par doses dans des récipients de réception de dose de produit de remplissage (5) dans l'isolateur à usage unique (1),
- un agencement de conduites (11) reliant le réservoir de produit de remplissage (7) et le dispositif de distribution de produit (13) pour acheminer le produit (10) prélevé du réservoir de produit de remplissage (7) au moyen du dispositif de prélèvement de produit (17) vers le dispositif de distribution de produit (13),
- un dispositif de commande (19) pour commander le dispositif de prélèvement de produit (17) en fonction des informations du dispositif de pesage (21), le dispositif de commande (19) étant conçu pour mesurer les doses de produit à prélever du réservoir de produit de remplissage (7) en fonction des informations relatives à la diminution de poids de l'ensemble constitué du réservoir de produit de remplissage (7) et de son contenu pendant le prélèvement de produit de remplissage,
l'isolateur à usage unique (1) comportant dans sa paroi des moyens de raccordement (27) pour raccorder des conduites externes (29) pour un fluide à acheminer à l'intérieur de l'isolateur à usage unique (1),
**caractérisé en ce que** le dispositif de remplissage comprend en outre une source de gaz protecteur (31) qui est raccordée aux moyens de raccordement (27) au moyen d'une conduite de gaz protecteur (29).

2. Dispositif de remplissage selon la revendication 1, dans lequel le dispositif de prélèvement du produit de remplissage (17) est conçu comme une pompe péristaltique commandable.

3. Dispositif de remplissage selon la revendication 1 et/ou 2, dans lequel l'isolateur à usage unique (1) comporte une paroi en film plastique, de préférence transparente, qui isole l'espace intérieur de l'isolateur de l'environnement extérieur de manière à le protéger contre toute contamination.

4. Dispositif de remplissage selon au moins l'une des revendications précédentes, dans lequel l'isolateur à usage unique (1) comporte des moyens d'accès à gants (3) pour la manipulation d'objets (5, 13, 25) à l'intérieur de l'isolateur à usage unique (1), en particulier du récipient de réception de dose de produit de remplissage (5), par une personne depuis l'extérieur.

5. Dispositif de remplissage selon au moins l'une des revendications précédentes, dans lequel l'isolateur à usage unique (1) comporte des moyens (12, 14) pour le passage stérile du dispositif de conduites (11) à travers la paroi de l'isolateur.

6. Dispositif de remplissage selon au moins l'une des revendications précédentes, dans lequel le dispositif de distribution de produit de remplissage (13) comporte une aiguille de remplissage.

7. Dispositif de remplissage selon au moins l'une des revendications précédentes, dans lequel le réservoir de liquide (7) est conçu comme un sac en film plastique avec un raccord inférieur (9) pour le dispositif de conduite (11).

8. Dispositif de remplissage selon au moins l'une des revendications précédentes, les récipients de réception de dose de produit de remplissage (5) étant des flacons de réactifs et/ou des flacons de médicaments.

9. Dispositif de remplissage selon au moins l'une des revendications précédentes, dans lequel des éléments de fermeture (25) sont prévus dans l'isolateur à usage unique (1) pour fermer les récipients de réception de dose de produit de remplissage (5).

10. Dispositif de remplissage selon au moins l'une des revendications précédentes, dans lequel le dispositif de commande (19) est conçu pour enregistrer une valeur de la quantité de dose respective par récipient de réception de dose de produit de remplissage (5) rempli, en particulier le poids de dose enregistré, en association avec les récipients de réception de dose de produit de remplissage (5) remplis concernés, afin de réaliser un contrôle en cours de processus.
